Europäisches Patentamt

European Patent Office

Office européen des brevets

(19)

(11) Veröffentlichungsnummer: **0 292 021**

**A2**

(12) **EUROPÄISCHE PATENTANMELDUNG**

(21) Anmeldenummer: 88108260.6

(22) Anmeldetag: 24.05.88

(51) Int. Cl.⁴: **B23B 31/26**

(30) Priorität: 22.05.87 DE 3717384

(43) Veröffentlichungstag der Anmeldung:
23.11.88 Patentblatt 88/47

(84) Benannte Vertragsstaaten:
AT BE CH DE ES FR GB GR IT LI LU NL SE

(71) Anmelder: ENTWICKLUNGSZENTRUM FÜR
ZERSPANUNGSTECHNIK GMBH & CO. KG
An den Stegmatten 67
D- 7630 Lahr 17(DE)

(72) Erfinder: **Blust, Rudolf**
**Schäfligraben 11**
**CH-8304 Zürich-Wallisellen(CH)**

(74) Vertreter: **Patentanwälte Grünecker,**
**Kinkeldey, Stockmair & Partner**
**Maximilianstrasse 58**
**D-8000 München 22(DE)**

(54) Spannvorrichtung.

(57)
1. Spannvorrichtung zum lösbaren eines Werkzeugs mit einer Arbeitsspindel.

2.1. Eine liegt die Aufgabe zugrunde, eine Spannvorrichtung zu schaffen, welche bei einfachem Aufbau und betriebssicherer Wirkungsweise eine automatisierbare Verbindung zwischen einem Werkzeug und einer Arbeitsspindel einer Werkzeugmaschine ermöglicht.

2.2. Erfindungsgemäß weist das Werkzeug 1 an seinem Endbereich einen Flansch 5 auf, welcher durch in der Arbeitsspindel 2 gelagerte Spannelemente 7 hintergriffen werden kann, wobei die Spannelemente 7 in radialer Richtung durch Einwirkung einer Spannhülse 6 bewegbar sind, welche axial verschiebbar in der Arbeitsspindel 2 gelagert ist.

2.3 Die Spannvorrichtung kann bei den verschiedensten Arten von Werkzeugmaschinen und für die verschiedensten Werkzeuge verwendet werden.

FIG. 1

## Spannvorrichtung

Die Erfindung bezieht sich auf eine Spannvorrichtung zum lösbaren Verbinden eines Werkzeugs mit einer Arbeitsspindel, wobei die Arbeitsspindel an ihrem freien Endbereich eine zentrische Aufnahmeausnehmung zur koaxialen Aufnahme des Werkzeugs aufweist.

Arbeitsspindeln von Werkzeugmaschinen, insbesondere von Arbeitszentren müssen so ausgebildet sein, daß es auf einfache und betriebssichere Weise möglich ist, Werkzeuge lösbar mit der Arbeitsspindel zu verbinden, um mittels der Werkzeuge die jeweiligen Arbeitsvorgänge, bei spielsweise eine zerspanende Bearbeitung eines Werkstücks vorzunehmen. Insbesondere bei der flexiblen Fertigung mit verketteten Bearbeitungszentren, aber auch bei Sondermaschinen und Transferlinien ist es erforderlich, den Werkzeugwechsel und die dazu zu verwendenden Vorrichtungen so auszubilden, daß das Werkzeug schnell und sicher mit der Arbeitsspindel verbunden werden kann und daß es ebenso möglich ist, das Werkzeug zum Werkzeugwechsel wieder von der Arbeitsspindel zu lösen. In bekannter Weise sind Werkzeuge an ihrem mit einer Arbeitsspindel zu verbindenden Endbereich kegelförmig ausgebildet und werden in einen entsprechenden Aufnahmekegel der Arbeitsspindel eingesetzt. Eine Kraftübertragung erfolgt dabei über die in den Kegelsitz auftretenden Reibungskräfte. Eine derartige Ausgestaltung eignet sich nur schlecht für einen automatisierten Werkzeugwechsel bzw. für eine automatisierbare Werkzeugspannung, da es nicht möglich ist, in gezielter Weise Spannkräfte aufzubringen. Auch eine Spannung eines Werkzeuges mittels eines Spannfutters weist den Nachteil auf, daß die Betätigung eines derartigen Spannfutters kaum automatisierbar ist und es mittels eines Spannfutters nicht möglich ist, verschiedene Werkzeuge schnell und ohne manuelle Handhabung zu wechseln.

Ein weiterer bei bekannten Spannvorrichtungen auftretender Nachteil liegt darin, daß eine Erwärmung des Werkzeuges und/oder der Arbeitsspindel während des Betriebs die Spannkräfte beeinflußt und somit möglicherweise zu einer Lösung der Verbindung zwischen dem Werkzeug und der Arbeitsspindel führt. Es ist aber bei bekannten Spannvorrichtungen auch möglich, daß eine Erwärmung dazu führt, daß das Werkzeug mit der Arbeitsspindel verklemmt und daß es somit nicht möglich ist, das Werkzeug in einfacher Weise zu wechseln.

Ein weiterer Nachteil bekannter Spannsysteme und Spannvorrichtungen liegt darin, daß es wegen der nicht vorherbestimmbaren Größe der Spannkräfte vielfach nicht möglich ist, Werkzeuge zu verwenden, bei welchen die an dem Werkzeug befestigte Schneidplatte in radialer Richtung durch axiale Verschiebung einer Betätigungsstange einjustierbar ist. Eine derartige Einjustierung bedingt die Aufbringung von Kräften in axialer Richtung, wodurch die Gefahr besteht, daß das Werkzeug möglicherweise von der Arbeitsspindel gelöst wird.

Der Erfindung liegt die Aufgabe zugrunde, eine Spannvorrichtung der eingangs genannten Art zu - schaffen, welche bei einfachem Aufbau und betriebssicherer Wirkungsweise eine automatisch betätigbare, von den Betriebsbedingungen der zu verwendenden Werkzeugmaschine unabhängige lösbare Verbindung zwischen einem Werkzeug und der Arbeitsspindel ermöglicht.

Die Aufgabe wird erfindungsgemäß dadurch gelöst, daß das Werkzeug an seinem mit der Arbeitsspindel zu verbindenden Endbereich mit einem kreisringförmigen, koaxial zur Drehachse des Werkzeugs angeordneten Flansch versehen ist, daß in der Aufnahmeausnehmung der Arbeitsspindel eine rohrförmige, koaxial angeordnete, zumindest einen Teil des Endbereichs des Werkzeugs mit einem Abstand umgebende, axial verschiebbare Spannhülse vorgesehen ist und daß in dem kreisringförmigen Zwischenraum zwischen der Spannhülse und dem Endbereich des Werkzeugs mehrere mittels der Spannhülse radial bewegbare, zum Spannen des Werkzeugs mit dem Flansch in hintergreifenden Eingriff bringbare Spannelemente vorgesehen sind.

Die erfindungsgemäße Spannvorrichtung zeichnet sich durch eine Reihe wesentlicher Vorteile aus. Durch Verwendung von Spannelementen, welche mit dem Flansch des Werkzeugs in formschlüssigen Eingriff bringbar sind, ist eine sichere Verspannung oder Verbindung zwischen dem Werkzeug und der Arbeitsspindel möglich. Eine derartige Verbindung ist unabhängig von der eigentlichen Handhabung des Werkzeugs in Eingriff bringbar oder lösbar, so daß es auf besonders einfache Weise möglich ist, den Werkzeugswechsel zu automatisieren. Eine entsprechende Werkzeugwechselvorrichtung muß somit bei Verwendung der erfindungsgemäßen Spannvorrichtung das Werkzeug nur aus der Arbeitsspindel entnehmen bzw. in diese einsetzen, es ist nicht erforderlich, daß die Werkzeugwechselvorrichtung, die zum Verbinden des Werkzeugs mit der Arbeitsspindel erforderlichen Kräfte aufbringt bzw. zum Lösen dieser Verbindung entsprechende Kräfte überwinden muß. Bei einem Wechsel des Werkzeugs und einem nachfolgenden Verbinden des Werkzeugs mit der Arbeitsspindel ist es somit möglich, das Werkzeug schnell und einfach zu handhaben und in geeigneter Weise eine radiale Zuordnung des Werkzeugs zu der Arbeitsspindel vorzunehmen. Die erfindungsgemäße Ausgestaltung des Werkzeugs, nämlich die Anordnung eines Flansches erweist sich deshalb als besonders vorteilhaft, da Kegelsitze oder Zylindersitze zur radialen Ausrichtung der Werkzeuge verwendet werden können. Auch erwiest es sich als besonders vorteilhaft, daß konventionelle Werkzeugwechselvorrichtung zur Anwendung gelangen können, da die hierfür vorgesehenen Bereiche der Werkzeuge, welche ebenfalls genormt sind, nicht verändert werden müssen. Durch die erfindungsgemäß vorgesehene Spannhülse ist es möglich, die Spannelemente in gezielter Weise in hintergreifenden Eingriff mit dem Flansch des Werkzeugs zu bringen bzw. sie derart außer Eingriff zu bringen, daß das Werkzeug entnommen werden kann. Dabei erweist es sich insbesondere als besonders vorteilhaft, daß die zum Spannen des Werkzeugs benötigten Kräfte mittels der Spannhülse auf die Spannelemente aufgebracht werden können, so daß es nicht erforderlich ist, das Werkzeug selbst bei seiner Handhabung mit Spannkräften zu beaufschlagen.

Ein weiterer Vorteil der erfindungsgemäßen Ausgestaltung liegt darin, daß die Spannvorrichtung den zentralen Bereich des Werkzeugs, welcher beispielsweise zur Kühlmittelzufuhr oder zum radialen Einstellen von Schneidplatten benötigt wird, nicht benötigt. Durch entsprechende Dimensionierung der Spannhülse und des Flansches ist es somit möglich, im zentralen Bereich des Werkzeuges bzw. der Arbeitsspindel einen ausreichenden Freiraum vorzusehen.

Da die Spannelemente mittels einer axialen Verschiebung der Spannhülse in gezielter Weise betätigbar sind besteht bei der erfindungsgemäßen Spannvorrichtung nicht die Gefahr, daß eine Erwärmung des Werkzeugs und/oder der Arbeitsspindel zu einer Beeinflussung oder Beeinträchtigung der Verbindung zwischen dem Werkzeug und der Arbeitsspindel führt.

Ein weiterer wichtiger Vorteil der erfindungsgemäßen Spannvorrichtung ist dadurch gegeben, daß diese sowohl für stehende als auch für angetriebene Werkzeuge verwendbar ist und somit bei verschiedensten Arten von Werkzeugmaschinen zur Anwendung kommen kann. Die Spannvorrichtung kann somit beispielsweise in Bearbeitungszentren oder bei Werkzeugmaschinen mit Mehrspindelköpfen verwendet werden.

Eine besonders günstige Ausgestaltung der erfindungsgemäßen Spannvorrichtung ist auch dadurch gegeben, daß die mit den Spannelementen in Eingriff bringbare Fläche des Flansches kegelförmig ausgebildet ist und daß die Spannelemente eine kegelringsegmentförmige Kontaktfläche aufweisen. Durch diese Ausgestaltung der Kontaktflächen des Flansches und der Spannelemente ist es in gezielter Weise möglich, durch eine vorgegebene radiale Bewegung der Spannelemente axiale Kräfte auf das Werkzeug aufzubringen und dieses somit in fester und betriebssicherer Weise mit der Arbeitsspindel zu verbinden. Durch eine eintsprechende Ausgestaltung der Neigungswinkel der kegelförmigen Kontaktflächen ist es möglich, eine sogenannte selbsthemmende Spannung des Werkzeuges vorzusehen. Auf diese Weise ist sichergestellt, daß sich die Spannelemente nicht in radialer Richtung relativ zu dem Flansch bewegen, falls über die Spannhülse keine oder nur zu geringe Kräfte aufgebracht werden.

Es erweist sich auch als vorteilhaft, daß die Spannhülse an ihrer Innenfläche einen kegelringförmigen Bereich aufweist, welcher mit einer kegelringsegmentförmigen Außenfläche jedes der Spannelemente in Eingriff bringbar ist. Durch eine derartige Ausbildung der Spannhülse und der Spannelemente kann in besonders einfacher und betriebssicherer Weise eine Bewegung der Spannelemente in radialer Richtung auf den Flansch des Werkzeugs hin erfolgen, wobei eine entsprechende Neigung der kegelartigen Bereiche eine Zuordnung des axialen Verschiebewegs der Spannhülse zu dem gewünschten radialen Weg der Spannelemente ermöglicht. Als besonders vorteilhaft erweist es sich dabei, daß die Neigung des kegelringförmigen Bereichs der Spannhülse und der kegelringsegmentförmigen Außenfläche des Spannelements so gewählt ist, daß bei axialer Verschiebung der Spannhülse vom Werkzeug weg eine in radialer Richtung zur Drehachse der Arbeitsspindel wirkende Kraft auf das Spannelement aufbringbar ist. Es ist somit möglich, die zur axialen Bewegung der Spannhülse dienende Kraft zugleich dazu zu verwenden, die Spannelemente gegen den Flansch des Werkzeugs zu drücken. Auf diese Weise ist es möglich, zusätzlich zu der durch den Kontakt der Spannelemente mit dem Flansch aufgebrachten Axialkräfte die zur Verschiebung der Spannhülse aufgebrachten Axialkräfte zur axialen Spannung des Werkzeugs mitzuverwenden.

Eine weitere vorteilhafte Ausgestaltung ist dadurch gegeben, daß jedes Spannelement eine der Drehachse der Arbeitsspindel zugewandte, mit einem Bereich der Spannhülse bei deren axialer Verschiebung in Anlage bringbare kegelringsegmentförmige Fläche aufweist. Im Gegensatz zu der obenbeschriebenen Ausgestaltung, welche der Verriegelung des Werkzeugs an der Arbeitsspindel dient, ist es bei der zuletzt genannten Ausgestaltung auf besonders einfache Weise möglich, die Spannelemente außer Eingriff von dem Flansch des Werkzeugs zu bringen, so daß das Werkzeug von der Arbeitsspindel entnommen werden kann. Dadurch, daß die Neigung der kegelringsegmentförmigen Fläche des Spannelements so gewählt ist, daß bei axialer Verschiebung der Spannhülse in Richtung auf das Werkzeug eine radial zur Drehachse der Arbeitsspindel nach außen wirkende Kraft aus das Spannelement aufbringbar ist, ist sichergestellt, daß die Spannelemente vollständig außer Eingriff von dem Flansch des Werkzeugs bringbar sind, so daß bei einem automatischen Werkzeugwechsel nicht die Gefahr besteht, daß das Werkezug doch noch mit der Arbeitsspindel verbunden ist, wenn dieses von einer Werkzeugwechseleinrichtung entnommen werden soll.

In besonders vorteilhafter Weise sind die Spannelemente relative zur Arbeitsspindel axial nicht verschiebbar angeordnet. Durch eine derartige Ausgestaltung ist sichergestellt, daß die Spannelemente stets so angeordnet sind, daß sie bei einer radial nach innen gerichteten Bewegung den Flansch des Werkzeugs hintergreifen. Eine Fehlbedienung ist somit ausgeschlossen. In vorteilhafter Weise liegen die Spannelemente mit ihren dem Werkzeug zugewandten Endbereich an einem an der Arbeitsspindel angeordneten Abstützring an. Diese vorteilhafte Ausgestaltung dient zur zusätzlichen Führung der Spannelemente und verhindert, daß diese in axialer Richtung bewegt werden, wenn eine Axialkraft auf das Werkzeug aufgebracht wird, welche das Werkzeug von der Arbeitsspindel wegzuziehen versucht. Durch diese Ausgestaltung ist es möglich, einen Teil der in axialer Richtung wirkenden Kräfte vom Flansch des Werkzeugs über die Spannelemente direkt auf die Arbeitsspindel zu leiten, so daß eine Entlastung der Spannhülse von Axialkräften möglich ist. Auf diese Weise ist es möglich, die Spannhülse mit geringen Querschnitten auszugestalten, da diese dann lediglich die zur radialen Bewegung der Spannelemente aufzubringenden Kräfte zu übertragen hat.

Eine besonders günstige Weiterentwicklung ist auch dadurch gegeben, daß die Spannelemente an ihrem dem Werkzeug abgewandten Endbereich an der Spannhülse gelenkig gelagert sind und zur radialen Bewegung ihres dem Werkzeug zugewandten Endbereichs um die gelenkige Lagerung - schwenkbar sind. Durch diese hebelartige Ausbildung der Spannelemente ist es auf besonders einfache Weise möglich, deren Bewegung gezielt zu steuern und zu beeinflussen, um, insbesondere bei einem automatisierten Werkzeugwechsel die erforderlichen Spannkräfte und/oder Entriegelungskräfte aufzubringen. Weiterhin ist sichergestellt, daß die Spannelemente in betriebssicherer Weise gelagert sind und während des Betriebs der zu verwendenden Werkzeugmaschine ihre Lage nicht verändern.

In vorteilhafter Weise sind auch in Umfangsrichtung zwischen den Spannelementen axial nicht verschiebbare, zum Teil in einem Teil der axialen Länge der Spannelemente angeordnete Distanzstücke vorgesehen. Diese Distanzstücke führen zum einen zu einer besonders sicheren Lagerung, insbesondere der obenbeschriebenen gelenkigen Lagerung der Spannelemente und verhindern zum anderen, daß die Spannelemente bei ihrer radialen Verschwenkung oder Bewegung aus ihrer Lage verrutschen können, wodurch die Spannvorrichtung nicht weiter verwendbar wäre.

Eine besonders günstige Weiterbildung der erfindungsgemäßen Spannvorrichtung ist dadurch gegeben, daß die Spannhülse mittels einer in der Arbeitsspindel gelagerten Federanordnung in axialer Richtung vom Werkzeug weg zum Spannen des Werkzeugs vorgespannt ist. Diese Ausgestaltung stellt sicher, daß das Werkzeug ohne äußere Kraftbeaufschlagung stets fest mit der Arbeitsspindel verbunden ist, so daß während des Betriebs der Werkzeugmaschine nicht die Gefahr eines ungewollten Lösens des Werkzeugs besteht. Durch geeignete Wahl der Federkraft der Federanordnung ist auch die durch die Spannvorrichtung aufzubringende Spannkraft vorbestimmbar. Auf diese Weise wird sichergestellt, daß unter allen Betriebsbedingungen eine sichere Spannung der Werkzeugs erfolgt.

Eine weitere vorteilhafte Weiterbildung der erfindungsgemäßen Spannvorrichtung ist dadurch gegeben, daß die Spannhülse mit einem die Arbeitsspindel zentrisch durchsetzenden Betätigungselement verbunden ist, welches mittels eines Hydraulikkolbens axial relativ zur Arbeitsspindel verschiebbar ist. Auf diese Weise kann die Spannhülse in gezielter Weise in axialer Richtung verschoben werden, wobei es möglich ist, die jeweilige Druckbeaufschlagung des Hydraulikkolbens in einfacher Weise mit den weiteren Arbeitsgängen, welche zum Werkzeugwechsel erforderlich sind, zu synchronisieren.

Ein weiterer Vorteil der erfindungsgemäßen Spannvorrichtung ist dadurch gegeben, daß durch die Umsetzung einer axialen Bewegung der Spannhülse in eine radiale Bewegung der Spannelemente und wiederum in eine axiale Verspannung des Werkzeugs eine besonders günstige Kraftübersetzung möglich ist, welche bei geringen Verschiebekräften der Spannhülse die Aufbringung besonders großer axialer Spannkräfte auf das Werkzeug er möglicht.

Eine günstige Weiterbildung der erfindungsgemäßen Spannvorrichtung ist auch dadurch gegeben, daß das Werkzeug einen kreisförmigen Anlageflansch aufweist, der an der dem Endbereich zugewandten Seite mit einer senkrecht zur Drehachse des Werkzeugs angeordneten Planfläche versehen ist und daß die Arbeitsspindel eine mit der Planfläche in Anlage bringbare, senkrecht zur Drehachse der Arbeitsspindel angeordnete Stirnfläche aufweist. Bei einer derartigen Ausgestaltung ist es möglich, in präziser Weise eine Zuordnung der Drehachse der Arbeitsspindel zu der Drehachse des Werkzeugs vorzunehmen, so daß winkelmäßige Versetzung oder Verkantungen in sicherer Weise vermieden werden. Weiterhin ist durch diese Ausgestaltung der Spannvorrichtung sichergestellt, daß keine axiale Verschiebung oder axiale Fehlpositionierung des Werkzeugs relativ zu der Arbeitsspindel möglich ist. Dies würde beispielsweise dann auftreten, wenn nur ein Kegelsitz zur Aufnahme des Werkzeugs in der Arbeitsspindel vorgesehen wäre. Bei einer Erwärmung der Arbeitsspindel würde sich dieser Kegelsitz ausweiten, wodurch das Werkzeug weiter in Richtung auf die Arbeitsspindel versetzt würde. Durch die Verwendung einer Planfläche und einer Stirnfläche werden diese Fehlermöglichkeiten vollständig eliminiert. Weiterhin erweist es sich sowohl bei der Herstellung von Werkzeugen als auch bei der Herstellung der Werkzeugmaschine als wesentlich günstiger, und zwar sowohl hinsichtlich der erforderlichen Toleranzen als auch hinsichtlich der Produktionskosten, eine plane Anlagefläche auszubilden, als kegelige oder sonstige Passflächen vorzusehen, welche in entsprechender Weise aufeinander abgestimmt werden müssen. Ein weiterer Vorteil ergibt sich daraus, daß mögliche, durch Temperaturunterschiede hervorgerufene unterschiedliche Ausdehnungen des Werkzeugs und/oder der Arbeitsspindel nicht zu einer Verklemmung des Werkzeugs führen können, da es zur angemessenen Positionierung des Werkzeugs an der Arbeitsspindel nicht notwendig ist, Klemmsitze oder Preßsitze vorzusehen.

Eine weitere günstige Ausgestaltung ist dadurch gegeben, daß die Arbeitsspindel an ihrem dem Werkzeug zugewandten Endbereich einen mit der Arbeitsspindel verbundenen Aufnahmeflansch aufweist und daß die Stirnfläche und die Aufnahmeausnehmung an dem Aufnahmeflansch ausgebildet sind. In besonders günstiger Weise ist der Aufnahmeflansch lösbar mit der Arbeitsspindel verbunden. Bei einer derartigen Ausgestaltung ist es möglich, den durch häufigen Werkzeugwechsel auftretenden Verschleiß an der Arbeitsspindel dadurch zu korrigieren, daß lediglich der Aufnahmeflansch ausgetauscht oder nachbearbeitet wird. Es besteht somit nicht die Notwendigkeit, die gesamte Arbeitsspindel auszubauen und nachzubearbeiten. Weiterhin ist es möglich, die Arbeitsspindel und den Aufnahmeflansch aus verschiednen Materialien herzustellen, beispielsweise aus Stählen verschiedener Härte oder verschiedener Zusammensetzung. Dies kann sich sowohl im Hinblick auf den Verschleiß als auch im Hinblick auf die durch Erwärmung auftretenden Ausdehnungen als vorteilhaft erweisen. Auf diese Weise ist es insbesondere möglich, einen direkten Einfluß einer Ausdehnung der Arbeitsspindel auf die Position des Werkzeuges zu verhindern, insbesondere bei einer Durchmesserveränderung der Arbeitsspindel.

Eine besonders vorteilhafte Weiterbildung ist dann gegeben, wenn der Aufnahmeflansch mit einer kegeligen Ausnehmung zur Aufnahme eines Zentrierkegels des Werkzeugs versehen ist. Ein derartiger Kegelsitz dient der leichten Einführung des Werkzeuges, wodurch es beispielsweise möglich ist, geringfügige Fluchtungsfehler, welche durch die Werkzeugwechselvorrichtung bedingt sind, auszugleichen. Weiterhin ist es mittels des Kegelsitzes möglich, eine in hohem Maße betriebssichere und genaue Zentrierung des Werkzeugs vorzunehmen. Durch eine geeignete Auswahl der jeweiligen Passungen ist es möglich, daß auch die kegelige Ausnehmung des Aufnahmeflansches im gespannten Zustand des Werkzeuges sich in Anlage an dem Zentrierkegel des Werkzeugs befindet. Dabei ist bei dieser vorteilhaften Ausgestaltung darauf hinzuweisen, daß der Kegelsitz zur Zentrierung dient, während die eigentliche Festlegung der Lage, insbesondere der axialen Ausrichtung des Werkzeugs über die Planfläche des Werkzeugs und die Stirnfläche der Arbeitsspindel erfolgt. Eine besonders vorteilhafte Ausgestaltung kann dadurch gegeben sein, daß der Kegelwinkel der kegeligen Ausnehmung des Aufnahmeflansches und der Kegelwinkel des Zentrierkegels des Werkzeugs unterschiedlich ausgebildet sind. Auf diese Weise erfolgt lediglich eine Linienberührung zwischen den beiden Kegeln, wodurch zum einen eine besonders sichere Zentrierung sichergestellt ist und wodurch zum anderen ein die leichtere Entnahme des Werkzeugs verhinderndes Verklemmen des Werkzeugs vermieden wird.

Im folgenden wird die Erfindung anhand von Ausführungsbeispielen in Verbindung mit der Zeichnung beschrieben. Dabei zeigt:

Fig. 1 eine Schnittansicht der erfindungsgemäßen Spannvorrichtung;

Fig. 2 eine vergrößerte Teilansicht der Darstellung von Fig. 1, wobei Fig. 2 im oberen Teil das Werkzeug in gespanntem Zustand und im unteren Teil in gelöstem Zustand darstellt;

Fig. 3 eine Schnittansicht entlang der Linie III-III von Fig. 2 und

Fig. 4 eine Schnittansicht, ähnlich Fig. 1, eines weiteren Ausführungsbeispiels der erfindungsgemäßen Spannvorrichtung.

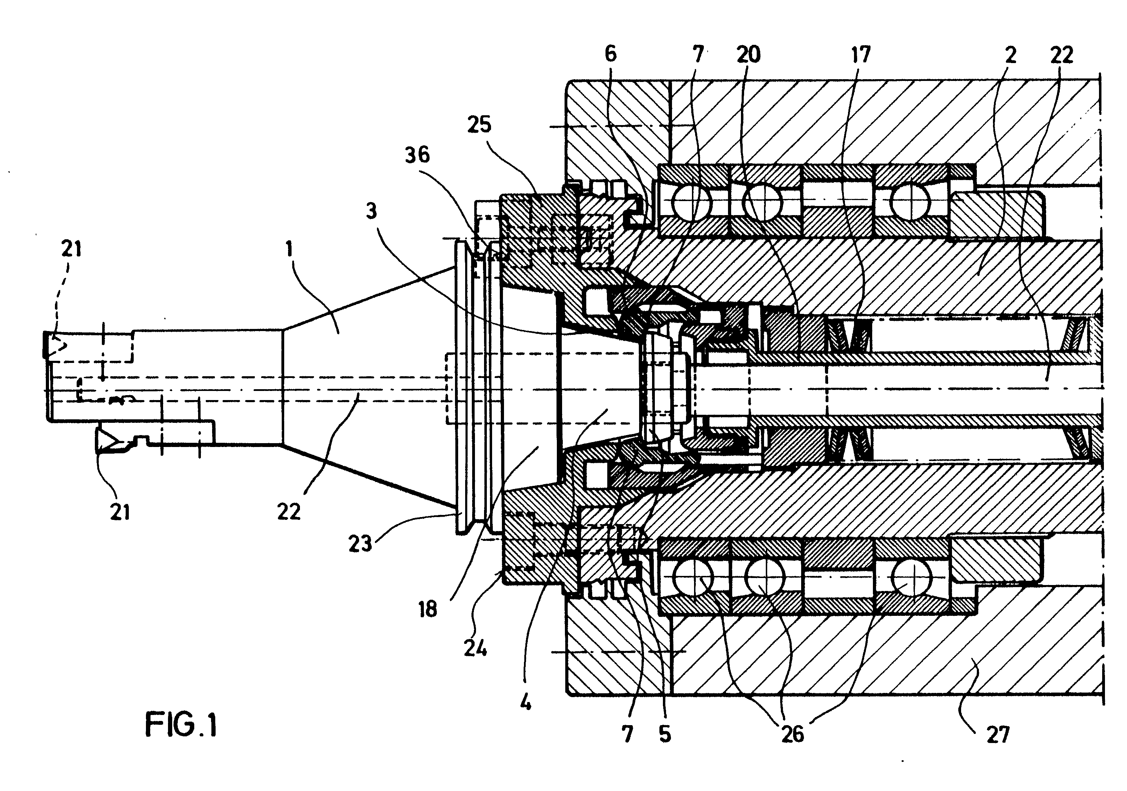

Fig. 1 zeigt ein nicht im Schnitt dargestelltes Werkzeug 1, welches an seinem in Fig. 1 linken Endbereich zwei Schneidplatten 21 aufweist. Das Werkzeug 1 ist in nicht dargestellter Weise so ausgebildet, daß durch Verschiebung einer Betätigungsstange 22 in axialer Richtung eine radiale Einstellung der Schneidplatten 21 möglich ist. Weiterhin weist das Werkzeug einen Anlageflansch 23 auf, welcher sich in Anlage an eine Stirnfläche 24 einer Arbeitsspindel 2 befindet. Der Anlageflansch 23 ist mit einer nicht mit Bezugszeichen versehenen Nut ausgestattet, welche dazu dient, das Werkzeug 1 mittels einer nicht gezeigten Handhabungsvorrichtung zu greifen und von der Arbeitsspindel 2 zu entnehmen. Anschließend an den Anlageflansch 23 weist das Werkzeug 1 einen Kegel 18 auf, welcher in einer kegeligen Ausnehmung der Arbeitsspindel 2 angeordnet ist und zusammen mit dieser Ausnehmung einen Kegelsitz 18 bildet, welcher zur Zentrierung des Werkzeugs an der Arbeitsspindel 2 dient. Ein der Arbeitsspindel 2 zugewandter Endbereich 4 des Werkzeugs 1 ist mit einem Flansch 5 versehen, welcher in seinem Durchmesser so gewählt ist, daß das Werkzeug 1 in einfacher Weise in eine Aufnahmeausnehmung 3 der Arbeitsspindel 2 einführbar ist, so wie dies in Fig. 1 dargestellt ist. Die Arbeitsspindel 2 weist bei dem in Fig. 1 dargestellten Ausführungsbeispiel einen Aufnahmeflansch 25 auf, welchermittels einer Schraubverbindung mit der Arbeitsspindel 2 fest verbunden ist. Die Arbeitsspindel 2 ist mittels einer Lagerung 26 an einem Gehäuse 27 einer im einzelnen nicht weiter dargestellten Werkzeugmaschine gelagert. Die Lagerung 26 der Arbeitsspindel 2 und die Abdichtung der Lagerung zur Umgebung des Gehäuses 27 hin wird hier im einzelnen nicht beschrieben, da sie in bekannter Weise ausgebildet sein kann.

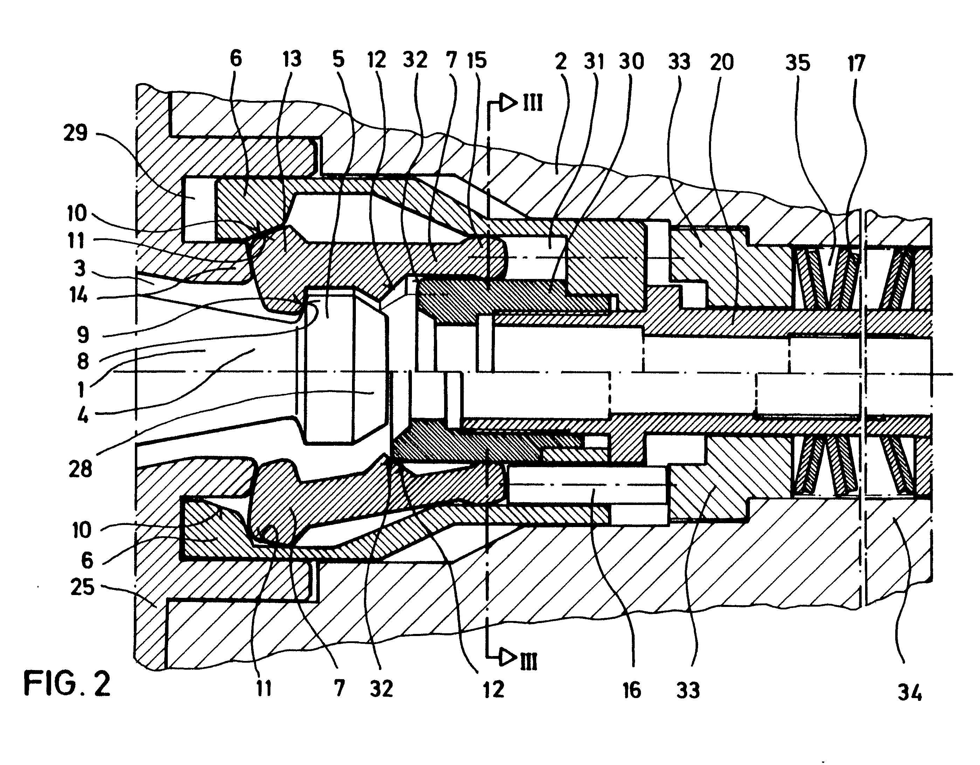

Fig. 2 zeigt eine vergrößerte Darstellung der in Fig. 1 gezeigten erfindungsgemäßen Spannvorrichtung, wobei die obere Hälfte der Fig. 2 einen Zustand darstellt, in welchem das Werkzeug 1 mit der Arbeitsspindel 2 verbunden ist, während die untere Hälfte der Fig. 2 einen Zustand zeigt, in welchem das Werkzeug 1 zwar in die Arbeitsspindel 2 eingeführt, mit dieser jedoch nicht verbunden ist.

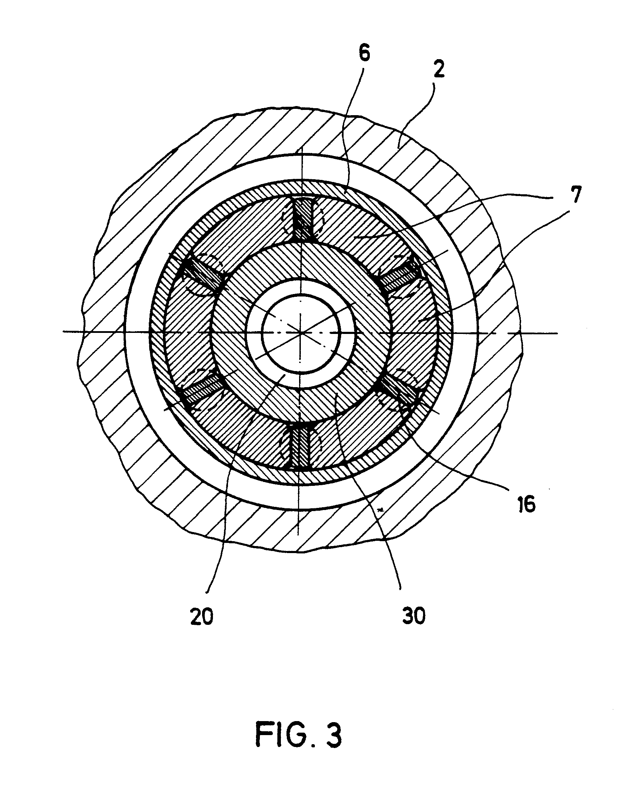

Der der Arbeitsspindel 2 zugewandte Endbereich 4 des Werkzeugs 1 weist, wie bereits in Zusammenhang mit Fig. 1 erläutert, einen Flansch 5 auf, welcher ringförmig ausgebildet ist. Zur Vereinfachung der Darstellung wurde in Fig. 2 darauf verzichtet, mögliche Kühlmittelbohrungen des Werkzeugs 1 bzw. die in Fig. 1 dargestellte Betätigungsstange 22 nochmals darzustellen. Der Flansch 5 geht in Richtung auf das vordere Ende des Werkzeugs 1 in eine Fläche 8 über, welche kegelförmig ausgebildet ist. Auch das in Fig. 2 rechts liegende Ende des Werkzeugs 1 ist in Form eines Kegels 28 ausgebildet. In der Aufnahmeausnehmung 3 der Arbeitsspindel 2 ist eine Spannhülse 6 angeordnet, welche im wesentlichen rohrförmig ausgebildet ist und den Endbereich des Werkzeugs 1, insbesondere den Flansch 5 umgibt. In dem Zwischenraum zwischen der Spannhülse 6 und dem Endbereich 4 des Werkzeugs 1 sind mehrere Spannelemente 7 angeordnet, welche, wie im Zusammenhang mit Fig. 3 beschrieben werden wird, auf einem zur Drehachse der Arbeitsspindel 2 konzentrischen Kreis angeordnet sind. Jedes der Spannelemente 7 weist einen dem Werkzeug zugewandten Endbereich 13 sowie einen dem Werkzeug 1 abgewandten Endbereich 15 auf. Der Endbereich 13 weist an seinem der Drehachse zugewandten Bereich eine Kontaktfläche 9 auf, welche kegelringsegmentförmig ausgebildet ist und welche mit der Fläche 8 des Flansches 5 in Eingriff bringbar ist. Die Spannelemente 7 sind, wie noch beschrieben wird, in radialer Richtung bewegbar. Eine radiale, der Drehachse der Arbeitsspindel 2 zugewandte Bewegung des Endbereichs 13 führt somit, wegen der kegeligen Ausbildung der Kontaktfläche 9 und der Fläche 8 zu einer axialen Kraftbeaufschlagung auf den Endbereich 4 des Werkzeugs 1, und zwar in der in Fig. 2 gezeigten Darstellungsweise nach rechts. Dies führt dazu, daß das Werkzeug 1 in den Kegelsitz 18 gezogen wird. An seinem radial außen liegenden Bereich weist der Endbereich 13 eine kegelringsegmentförmige Außenfläche 11 auf, welche in Anlage an eine nach innen weisende kegelringsegmentförmige Fläche 10 der Spannhülse 6 bringbar ist. Eine Bewegung der Spannhülse 6 nach rechts (Fig. 2) bewirkt somit, bedingt durch die kegelförmige Ausbildung des Bereichs 10 und der Fläche 11 eine radiale Bewegung des Endbereichs 13 des Spannelements 7 in Richtung auf die Drehachse der Arbeitsspindel 2. Auf diese Weise führt eine axiale Verschiebung der Spannhülse 6 nach rechts, so wie dies in der oberen Hälfte der Fig. 2 dargestelt ist, zu einer radialen Bewegung des Endbereichs 13 des Spannelements 7 in Richtung auf die Drehachse der Arbeitsspindel 2 und zu einer axialen Druckbeaufschlagung des Flansches 5 des Werkzeugs 1 nach rechts (Fig. 2).

Die Spannhülse 6 ist in einer zylindrischen Ausnehmung der Arbeitsspindel 2 geführt, wobei der dem Werkzeug zugewandte Endbereich der Spannhülse 6 in einer Ringausnehmung 29 des Aufnahmeflansches 25 gelagert ist. Die zylindrische Ausnehmung der Arbeitsspindel 2 und die Dimensionierung der Ringausnehmung 29 sind so gewählt, daß die Spannhülse 6 von der im oberen Bereich der Fig. 2 gezeigten Stellung um einen gewissen Betrag nach links, in Richtung auf den Aufnahmeflansch 25 verschiebbar ist.

Das Spannelement 7 is an seinem dem Werkzeug 1 abgewandten Endbereich 15 ballig oder teilkugelförmig ausgebildet und scharnierartig an der Spannhülse 6 gelagert. Die Spannhülse 6 ist an ihrem dem Werkzeug 1 abgewandten Endbereich fest mit einem rohrförmigen oder stangenförmigen Betätigungselement 20 und mit einem Stützzylinder 30 verbunden. Das Betätigungselement 20 erstreckt sich durch eine im einzelnen nicht dargestellte zentrische Ausnehmung der Arbeitsspindel 2 und ist mit einem nicht dargestellten Betätigungselement, beispielsweise einem Hydraulikkolben verbunden, mittels dessen eine axiale Verschiebung des Betätigungselements 20 und damit der mit dem Betätigungselement 20 fest verbundenen Spannhülse 6 möglich ist. Der Stützzylinder 30 erstreckt sich im wesentlichen parallel zur Spannhülse 6 über einen Teil deren Gesamtlänge in Richtung auf das Werkzeug 1 und bildet mit der Spannhülse 6 einen Ringspalt 31, in welchem der Endbereich 15 des Spannelements 7 schwenkbar gelagert ist. Eine Stirnfläche 32 des Stützzylinders 30 ist so angeordnet und dimensioniert, daß bei einer Vershiebung der Spannhülse 6 nach links (Fig. 2) in Richtung auf das Werkzeug 1 die Stirnfläche 32 mit einer kegelringsegmentförmigen Fläche 12 des Spannelements 7 in Eingriff bringbar ist. Durch Zusammenwirken der Fläche 12 und der Stirnfläche 32 wird das Spannelement 7 radial nach außen verschwenkt. Bei einer Verschiebung der Spannhülse 6 in Richtung auf das Werkzeug 1 kommen der Bereich 10 und die Außenfläche 11 außer Eingriff, bevor die Stirnfläche 32 gegen die Fläche 12 gedrückt wird, so daß das Spannelement 7 hebelartig radial nach außen bewegt werden kann.

Die untere Hälfte der Fig. 2 zeigt, wie bereits erwähnt, einen Zustand, in welchem das Werkzeug 1 in die Arbeitsspindel 2 eingeführt ist, in welchem jedoch keine Verspannung oder Verriegelung durch die Spannelement 7 erfolgt ist. Bei dem in Fig. 2 unten gezeigten Zustand ist die Spannhülse 6 in der Ringausnehmung 29 nach links verschoben, wodurch der Bereich 10 und die Außenfläche 11 außer Eingriff gekommen sind und wodurch die Stirnfläche 32 gegen die Fläche 12 des Spannelements 7 gedrückt wurde, um dieses radial nach außen zu verschwenken. Bei dem in Fig. 2 unten gezeigten Zustand wird das Spannelement 7 durch die Zusammenwirkung der Stirnfläche 32 und der kegelringsegmentförmigen Fläche 12 in seiner verschwenkten Lage gehalten, so daß sichergestellt ist, daß das Werkzeug 1 von der Arbeitsspindel 2 entnommen werden kann bzw. in diese eingesetzt werden kann. Auf diese Weise ist ein automatischer Werkzeugwechsel möglich, wobei auf sichere Weise verhindert wird, daß die Spannelemente 7 die in Fig. 2 unten gezeigte Lage verlassen und ein Einführen oder Entnehmen des Werkzeugs 1 verhindern.

Der dem Werkzeug 1 zugewandte Endbereich 13 der Spannelemente 7 ist im wesentlichen sphärisch ausgebildet und befindet sich in Anlage an einem mit einer konkaven Fläche versehenen Abstützring 14 des Aufnahmeflansches 25. Der Abstützring 14 dient dazu, eine in axialer Richtung wirkende Abstützkraft auf die Spannelemente 7 aufzubringen, so daß es möglich ist, eine vom Werkzeug 1 während des Betriebs der Werkzeug maschine eingeleitete axiale Belastung direkt über den dem Werkzeug 1 zugewandten Endbereich 13 des Spannelements 7 auf die Arbeitsspindel 2 überzuleiten, ohne diese Kräfte auf die Spannhülse 6 aufzubringen.

Fig. 2 zeigt in ihrem unteren Teil weiterhin ein Distanzstück 16, welches, wie in Zusammenhang mit Fig. 3 noch erläutert werden wird, zwischen den Spannelementen 7, und zwar insbesondere zwischen deren dem Werkzeug 1 abgewandten Endbereichen 15 und zwischen dem jeweiligen Endbereich 15 und einem Anlagering 33 angeordnet ist. Der Anlagering 33 ist fest, beispielswiese mittels einer Schraubverbindung mit der Arbeitsspindel 2 verbunden. In gleicher Anzahl wie die Spannelemente 7 sind auch Distanzstücke 16 vorgesehen, welche ebenfalls auf einem konzentrischen Kreis, ebenso wie die Spannelemente 7, angeordnet sind. Die Distanzstücke 16 dienen zum einen der Führung der Spannelemente 7 in Umfangsrichtung als auch der Abstützung der Endbereiche 15 der Spannelemente 7 in axialer Richtung, um eine axiale Bewegung der Spannelemente 7 zu verhindern.

Das Betätigungselement 20, welches fest mit der Spannhülse 6 verbunden ist, erstreckt sich, wie bereits erwähnt, durch die Arbeitsspindel 2 und ist mittels einer nicht dargestellten Betätigungseinrichtung in axialer Richtung verschiebbar, um somit die Spannhülse 6 zu verschieben und die Spannelemente 7 zu verschwenken. Das Betätigungselement 20 weist in einem Abstand zu seinem der Spannhülse 6 zugewandten Endbereich eine Anlagefläche 34 auf, welche einen Bereich größeren Durchmessers bildet. Die Arbeitsspindel 2 weist, angrenzend an den Anlagering 33 einen Zylinderraum 35 größeren Durchmessers auf, so daß zwischen dem Außendurchmesser des Betätigungselements 20 und der Arbeitsspindel 2 mittels des Zylinderraums 35 ein Zwischenraum ausgebildet wird, in welchem eine Federanordnung 17 angeordnet ist. Die Federanordnung 17 ist so vorgespannt, daß das Betätigungselement 20 und somit auch die Spannhülse 6 vom Werkzeug 1 weg vorgespannt ist, so daß mittels der Federkraft der Federanordnung 17 die Spannelemente 7 in Anlage an den Flansch 5 des Werkzeugs 1 gedrückt werden.

Fig. 3 zeigt einen Schnitt entlang der Linie III-III von Fig. 2. Bei dem in Fig. 3 gezeigten Ausführungsbeispiel sind sieben Spannelemente 7 vorgesehen, wie bereits erwähnt, sind dazu auch in gleicher Zahl sieben Distanzstücke 16 angeordnet, welche zwischen den Spannelementen 7 vorgesehen sind.

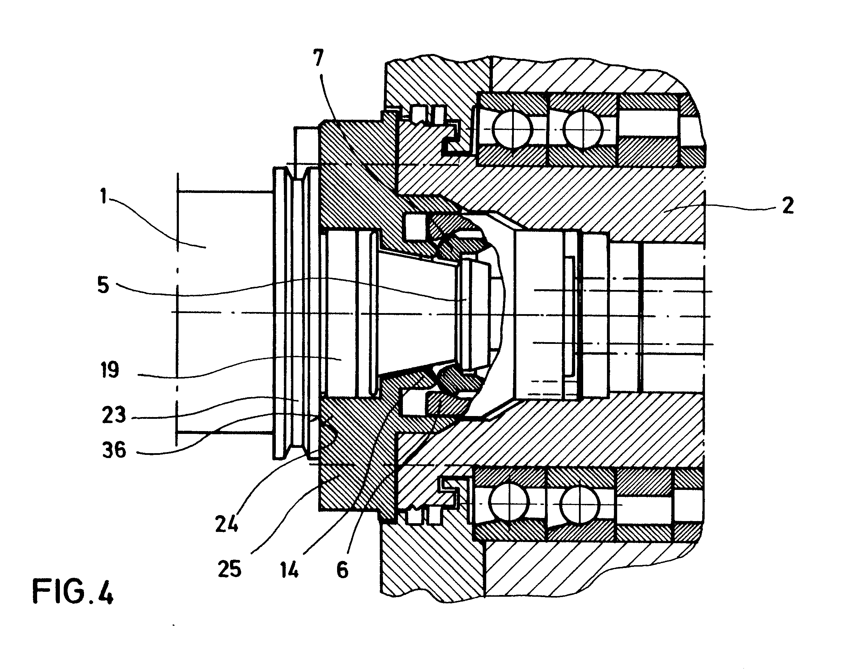

Fig. 4 zeigt ein weiteres Ausführungsbeispiel, welches sich von dem in Fig. 1 gezeigten Ausführungsbeispiel dadurch unterscheidet, daß anstelle des Kegelsitzes 18 ein Zylindersitz 19 vorgesehen ist, welcher zur Zentrierung des Werkstücks 1 an dem Aufnahmeflansch 25 der Arbeitsspindel 2 dient.

Bei dem in Fig. 1 gezeigten gespannten Zustand des Werkzeugs liegt die Stirnfläche 24 des Aufnahmeflansches 25 gegen eine Planfläche 36 des Anlageflansches 23 an. Die Zusammenwirkung dieser beiden Flächen führt zu einer höchst präzisen axialen Ausrichtung des Werkzeugs 1 relativ zu der Arbeitsspindel 2. Der Aufnahmeflansch 25 ist mittels nicht mit Bezugszeichen versehener Schrauben mit der Arbeitsspindel 2 verbunden, so daß es möglich ist, ohne Ausbau der Arbeitsspindel 2 den Aufnahmeflansch 25 zu entfernen und einen möglicherweise autretenden Verschleiß zu beseitigen, d.h. durch Bearbeitung des Aufnahmeflansches 25 oder durch Austausch gegen einen anderen Aufnahmeflansch.

Die Erfindung ist nicht auf die beschriebenen Ausführungsbeispiel beschränkt, vielmehr ist es möglich, die Anzahl und die Ausgestaltung der Spannelemente zu variieren und insbesondere die Lage und Dimensionierung der Kontaktflächen zwischen den Spannelementen und der Spannhülse bzw. dem Werkzeug abzuändern.

## Ansprüche

1. Spannvorrichtung zum lösbaren Verbinden eines Werkzeugs mit einer Arbeitsspindel, wobei die Arbeitsspindel an ihrem freien Endbereich eine zentrische Aufnahmeausnehmung zur koaxialen Aufnahme des Werkzeugs aufweist, dadurch **gekennzeichnet,** daß das Werkzeug (1) an seinem mit der Arbeitsspindel (2) zu verbindenden Endbereich (4) mit einem kreisringförmigen, koaxial zur Drehachse des Werkzeugs angeordneten Flansch (5) versehen ist, daß in der Aufnahmeausnehmung (3) der Arbeitsspindel (2) eine rohrförmige, koaxial angeordnete, zumindest einen Teil des Endbereichs (4) des Werkzeugs (1) mit einem Abstand umgebende, axial verschiebbare Spannhülse (6) vorgesehen ist und daß in dem kreisringförmigen Zwischenraum zwischen der Spannhülse (6) und dem Endbereich (4) des Werkzeugs (1) mehrere mittels der Spannhülse (6) radial bewegbare, zum Spannen des Werkzeugs (1) mit dem Flansch (5) in hintergreifenden Eingriff bringbare Spannelemente (7) vorgesehen sind.

2. Spannvorrichtung nach Anspruch 1, dadurch gekennzeichnet, daß die mit den Spannelementen (7) in Eingriff bringbare Fläche (8) des Flansches (5) kegelförmig ausgebildet ist und daß die Spannelemente (7) eine kegelringsegmentförmige Kontaktfläche (9) aufweisen.

3. Spannvorrichtung nach einem der Ansprüche 1 oder 2, dadurch gekennzeichnet, daß die Spannhülse (6) an ihrer Innenfläche einen kegelringförmigen Bereich (10) aufweist, welcher mit einer kegelringsegmentförmigen Außenfläche (11) jedes der Spannelemente (7) in Eingriff bringbar ist.

4. Spannvorrichtung nach Anspruch 3, dadurch gekennzeichnet, daß die Neigung des kegelringförmigen Bereichs (10) der Spannhülse (6) und der kegelringsegmentförmigen Außenfläche (11) des Spannelements (7) so gewählt ist, daß bei axialer Verschiebung der Spannhülse (6) vom Werkzeug (1) weg eine in radialer Richtung zur Drehachse der Arbeitsspindel (2) wirkende Kraft auf das Spannelement (7) aufbringbar ist.

5. Spannvorrichtung nach einem der Ansprüche 1 bis 4, dadurch gekennzeichnet, daß jedes Spannelement (7) eine der Drehachse der Arbeitsspindel (2) zugewandte, mit einem Bereich der Spannhülse (6) bei deren axialer Verschiebung in Anlage bringbare kegelringsegmentförmige Fläche (12) aufweist.

6. Spannvorrichtung nach Anspruch 5, dadurch gekennzeichnet, daß die Neigung der kegelringsegmentförmigen Fläche (12) des Spannelements (7) so gewählt ist, daß bei axialer Verschiebung der Spannhülse (6) in Richtung auf das Werkzeug (1) eine radial zur Drehachse der Arbeitsspindel (2) nach außen wirkende Kraft auf das Spannelement (7) aufbringbar ist.

7. Spannvorrichtung nach einem der Ansprüche 1 bis 6, dadurch gekennzeichnet, daß die Spannelemente (7) relativ zur Arbeitsspindel (2) axial nicht verschiebbar angeordnet sind.

8. Spannvorrichtung nach Anspruch 7, dadurch gekennzeichnet, daß die Spannelemente (7) mit ihrem dem Werkzeug (1) zugewandten Endbereich (13) an einem an der Arbeitsspindel (2) angeordneten Abstützring (14) anliegen.

9. Spannvorrichtung nach einem der Ansprüche 1 bis 8, dadurch gekennzeichnet, daß die Spannelemente (7) an ihrem dem Werkzeug (1) abgewandten Endbereich (15) an der Spannhülse (6) gelenkartig gelagert sind und zur radialen Bewegung ihres dem Werkzeug (1) zugewandten Endbereichs (13) um die gelenkige Lagerung - schwenkbar sind.

10. Spannvorrichtung nach einem der Ansprüche 1 bis 9, dadurch gekennzeichnet, daß in Umfangsrichtung zwischen den Spannelementen (7) axial nicht verschiebbare, zumindest in einem Teil der axialen Länge der Spannelemente (7) angeordnete Distanzstücke (16) vorgesehen sind.

11. Spannvorrichtung nach einem der Ansprüche 1 bis 10, dadurch gekennzeichnet, daß die Spannhülse (6) mittels einer in der Arbeitsspindel (2) gelagerten Federanordnung (17) in axialer Richtung vom Werkzeug (1) weg zum Spannen des Werkzeugs (1) vorgespannt ist.

12. Spannvorrichtung nach einem der Ansprüche 1 bis 11, dadurch gekennzeichnet, daß die Spannhülse (6) mit einem die Arbeitsspindel (2) zentrisch durchsetzenden Betätigungselement (20) verbunden ist, welches mittels eines Hydraulikkolbens axial relativ zur Arbeitsspindel (2) verschiebbar ist.

13. Spannvorrichtung nach einem der Ansprüche 1 bis 12, dadurch gekennzeichnet, daß das Werkzeug (1) mittels eines Kegelsitzes (18) in der Arbeitsspindel (2) zentrierbar ist.

14. Spannvorrichtung nach einem der Ansprüche 1 bis 12, dadurch gekennzeichnet, daß das Werkzeug (1) mittels eines Zylindersitzes (19) in der Arbeitsspindel (2) zentrierbar ist.

15. Spannvorrichtung nach einem der Ansprüche 1 bis 12, dadurch gekennzeichnet, daß das Werkzeug (1) einen kreisringförmigen Anlageflansch (23) aufweist, der an der dem Endbereich (4) zugewandten Seite mit einer senkrecht zur Drehachse des Werkzeugs angeordneten Planfläche (36) versehen ist und daß die Arbeitsspindel (2) eine mit der Planfläche (36) in Anlage bringbare, senkrecht zur Drehachse der Arbeitsspindel angeordnete Stirnfläche (24) aufweist.

16. Spannvorrichtung nach Anspruch 15, dadurch gekennzeichnet, daß die Arbeitsspindel (2) an ihrem dem Werkzeug (1) zugewandten Endbereich einen mit der Arbeitsspindel (2) verbundenen Aufnahmeflansch (25) aufweist und daß die Stirnfläche (24) und die Aufnahmeausnehmung (3) an dem Aufnahmeflasch (25) ausgebildet sind.

17. Spannvorrichtung nach Anspruch 16, dadurch gekennzeichnet, daß der Aufnahmeflansch (25) lösbar mit der Arbeitsspindel (2) verbunden ist.

18. Spannvorrichtung nach Anspruch 16 oder 17, dadurch gekennzeichnet, daß der Aufnahmeflansch (25) mit einer kegeligen Ausnehmung zur Aufnahme eines Zentrierkegels des Werkzeugs (1) versehen ist.

19. Spannvorrichtung nach Anspruch 16 oder 17, dadurch gekennzeichnet, daß der Aufnahmeflansch (25) mit einer zylindrischen Ausnehmung zur Aufnahme eines Zentrierzylinders des Werkzeugs (1) versehen ist.

20. Spannvorrichtung nach Anspruch 8 und einem der Ansprüche 16 bis 19, dadurch gekennzeichnet, daß der Abstützring (14) an dem Aufnahmeflansch (25) ausgebildet ist.

FIG.1

0 292 021

FIG. 2

6  13  5  12  32  7  15  2  31  30  33  20  35  17

29
10
11
3
14
9
8
1
4
28
10
6
25

11  7  32  12  16  33  34

0 292 021

FIG. 3

**FIG.4**

0 292 021